(19) Europäisches Patentamt
European Patent Office
Office européen des brevets

(11) **EP 2 099 116 B1**

(12) **EUROPEAN PATENT SPECIFICATION**

(45) Date of publication and mention
of the grant of the patent:
**27.07.2011 Bulletin 2011/30**

(51) Int Cl.:
***H02M 5/297*** *(2006.01)*     ***H02M 7/217*** *(2006.01)*

(21) Application number: **08014635.0**

(22) Date of filing: **18.08.2008**

(54) **Motor driver provided with converter circuit**

Motorantrieb mit Umrichterschaltung

Entraînement de moteur comporter un circuit de convertisseur

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.02.2008 JP 2008048372**

(43) Date of publication of application:
**09.09.2009 Bulletin 2009/37**

(73) Proprietor: **Hitachi Appliances, Inc.**
**Minato-ku**
**Tokyo 105-0022 (JP)**

(72) Inventors:
• **Tamura, Kenji**
**Tochigi 329-4493 (JP)**
• **Okuyama, Atsushi**
**Tochigi 329-4493 (JP)**
• **Tamura, Masahiro**
**Tochigi 329-4493 (JP)**
• **Notohara, Yasuo**
**Tokyo 100-8220 (JP)**

(74) Representative: **MERH-IP**
**Matias Erny Reichl Hoffmann**
**Paul-Heyse-Strasse 29**
**80336 München (DE)**

(56) References cited:
**JP-B- 2 809 463**

• **Infineon Technologies AG: "CCM-PFC ICE1PCS01 ICE1PCS01G Standalone Power Factor Correction (PFC) Controller in Continuous Conduction Mode (CCM) Preliminary Datasheet Version 1.1" 28 May 2003 (2003-05-28), pages 1-18, XP002575206 Retrieved from the Internet: URL:http://www.alldatasheet.com/view.jsp?S earchword=ICE1PCS01> [retrieved on 2010-03-25]**
• **JUNYANG LUO ET AL: "A new continuous conduction mode PFC IC with average current mode control" POWER ELECTRONICS AND DRIVE SYSTEMS, 2003. PEDS 2003. THE FIFTH INTERN ATIONAL CONFERENCE ON SINGAPORE 17-20 NOV. 2003, PISCATAWAY, NJ, USA,IEEE, PISCATAWAY, NJ, USA, vol. 2, 17 November 2003 (2003-11-17), pages 1110-1114, XP010694313 ISBN: 978-0-7803-7885-8**

## Description

## FIELD OF THE INVENTION

The present invention relates to a motor driver, and more particularly, to a motor driver provided with a converter circuit and a control unit for controlling the converter circuit.

## BACKGROUND OF THE INVENTION

Various types of motor drivers have been well known as being structured to allow a rectifier circuit for converting an AC voltage into a DC voltage to rectify a source current, and to have a converter circuit which suppresses the harmonic of the source current rectified by the rectifier circuit and improves the power factor.

For example, Japanese Unexamined Patent Application Publication No. 1-114372, Patent Nos. 2796340 and 2809463 disclose the motor driver which allows the booster chopper circuit formed of the reactor and the booster chopper switching element to suppress the harmonic of the source current and to improve the power factor.

The motor driver disclosed in Unexamined Patent Application Publication No. 1-114372, Patent Nos. 2796340 and 2809463 is basically structured to control the input current waveform into the sinusoidal waveform in synchronization with the source voltage using only the momentary value of the source current and the proportional gain without detecting the sinusoidal current command waveform and the source voltage phase as the reference.

Under the control disclosed in Unexamined Patent Application Publication No. 1-114372, the booster chopper switching element in the converter circuit is operated in the whole range of the source voltage where the AC source is rectified by the rectifier circuit to suppress the harmonic and to improve the power factor. The conduction ratio of the booster chopper switching element is adjusted in accordance with the source current such that the conduction ratio is lowered as the source current gets closer to the peak. In Unexamined Patent Application Publication No. 1-114372, the effect of boosting through conduction of the booster chopper switching element cannot be sufficiently obtained around the peak of the source current.

Under the control for making the boosting ratio constant disclosed in Patent No. 2796340, the conduction to the booster chopper switching element is stopped around the peak of the source current to suppress the circuit loss of the switching element for achieving the high efficiency.

Under the control disclosed in Patent No. 2809463, in the power source device which allows the rectifier circuit to rectify the AC source, and the smoothing capacitor to make the source voltage rectified by the rectifier circuit into the DC voltage, the DC voltage pulsation content generated when reducing the capacity of the smoothing capacitor may be reduced by correcting the conduction ratio of the booster chopper switching element in the converter circuit in accordance with the DC voltage pulsation content. The control allows reduction in the capacity of the smoothing capacitor, thus achieving the lower cost of the power source circuit. Stand-alone continuous conduction mode (CCM) PFC controllers are disclosed in: Infineon Technologies AG: "CCM-PFC ICE1 PCS01 ICE1 PCS01 G Standalone Power Factor Correction (PFC) Controller in Continuous Conduction Mode (CCM) [Preliminary Datasheet Version 1.1" (2003-05-28), pages 1-18] which discloses a standalone power factor correction controller in continous conduction mode. Further, JUNYANG LUO ET AL: "A new continuous conduction mode PFC IC with average current mode control" [POWER ELECTRONICS AND DRIVE SYSTEMS, 2003. PEDS 2003. THE FIFTH INTERNATIONAL CONFERENCE ON SINGAPORE 17-20 NOV. 2003, PISCATAWAY, NJ, USA,IEEE, vol. 2., (2003-11-17), pages 1110-1114, XP01 0694313 ISBN: 978-0-7803-7885-8] discloses a continous conduction mode (CCM) PFC controller does not need a direct sinewave sensing reference signal from the AC main.

In Japanese Unexamined Patent Application Publication No. 1-114372, Patent Nos. 2796340 and 2809463 mentioned above, the conduction ratio of the booster chopper switching element in the converter circuit is adjusted such that the target DC voltage is achieved irrespective of the state of the AC source voltage to be supplied. Accordingly, when the AC source voltage becomes high, the conduction ratio is generally lowered to reduce the load exerted to the element, thus causing no problem. Conversely when the AC source voltage is lowered, the conduction ratio of the booster chopper switching element generally becomes high. As a result, the temperature of the booster chopper switching element rises or the peak current of the source current becomes high, thus requiring the element to be sophisticated. This may increase the cost and the circuit loss.

According to Patent No. 2796340, the conduction ratio of the booster chopper switching element is set to have the constant boosting ratio without being influenced by the voltage state of the AC source to be supplied. However, the value of the DC voltage boosted by the converter circuit varies depending on the voltage state of the AC source.

## SUMMARY OF THE INVENTION

It is an object of the present invention to provide a motor driver capable of controlling the conduction ratio of the booster chopper switching element in accordance with a voltage state of the AC source, and suppressing the circuit loss while ensuring the low-cost structure and reliability of the booster chopper switching element. This object of the invention is achieved by the subject-matter according to the independent claim 1. The dependent claims refer to preferred embodiments of the invention.

The present invention provides a motor driver having a converter circuit and a control device for controlling the converter circuit. The converter circuit includes a rectifier circuit for converting an AC current into a DC current, a booster circuit for boosting using a switching operation of a booster chopper switching element and an energy accumulation effect of a reactor, and/or a smoothing capacitor for smoothing a boosted DC voltage. The control device includes a converter control unit for controlling the booster chopper switching element by calculating a power distribution ratio thereof. The converter control unit includes a boosting ratio control unit for controlling an input current waveform into a sinusoidal waveform in synchronization with a source voltage based on a source current momentary value and a proportional gain without detecting a sinusoidal current command waveform and a source voltage phase as a reference, and/or a proportional gain calculation unit for calculating the proportional gain such that a difference between a DC voltage value smoothed by the smoothing capacitor of the converter circuit and a target DC voltage becomes a predetermined value.

Preferable structures according to the present invention will be specifically described hereinafter.

(1) An inverter circuit for controlling a rotation speed of a permanent magnet synchronization motor based on a DC voltage boosted and smoothed by the converter circuit is provided.

(2) The converter control unit includes a correction control unit for calculating the target DC voltage in accordance with the source current value or the motor rotation speed to be output to the proportional gain calculation unit.

(3) The correction control unit calculates a conduction ratio of the booster chopper switching element from a difference between a present DC voltage value and the target DC voltage value so as to obtain the target DC voltage in accordance with one of the source current value and the motor rotation speed.

(4) The correction control unit calculates a gain effective range with respect to the conduction ratio of the booster chopper switching element in accordance with one of the source current value and the motor rotation speed.

(5) The correction control unit calculates an effective range of a change ratio with respect to the conduction ratio of the booster chopper switching element in accordance with one of the source current value and the motor rotation speed.

(6) An external selection function and an external memory device are allowed to select one of the source current value and the motor rotation speed to obtain the target DC voltage.

(7) An external selection function and an external memory device are allowed to select a set point of one of the target DC voltage, the conduction ratio of the booster chopper switching element, the effective range with respect to the conduction ratio of the booster chopper witching element, and an effective range of the change ratio with respect to the conduction ratio of the booster chopper switching element.

The above-structured motor driver according to the present invention is capable of controlling the conduction ratio of the booster chopper switching element in accordance with the AC source voltage state, and suppressing the circuit loss while ensuring the low-cost structure and reliability of the booster chopper switching element.

## BRIEF DESCRIPTION OF THE DRAWINGS

Fig. 1 shows a whole structure of a motor driver according to a first embodiment of the present invention;
Fig. 2 is a control block diagram of a converter control unit of a control device shown in Fig. 1;
Fig. 3 is a control block diagram of a converter control unit of a motor driver according to a second embodiment of the present invention;
Fig. 4 is a view showing an exemplary state where a target DC voltage calculation unit is set by the converter control unit shown in Fig. 3;
Fig. 5 is a view showing an exemplary state where an effective range of a proportional gain is set by the converter control unit shown in Fig. 3; and
Fig. 6 is a view showing an exemplary state where a PWM power distribution ratio limiter calculator is set by the converter control unit shown in Fig. 3.

## DETAILED DESCRIPTION OF THE REFERRED EMBODIMENT

Embodiments of a motor driver according to the present invention will be described referring to the drawings. Same reference numerals shown in the embodiments will be used to designate the identical or equivalent elements.

### First Embodiment

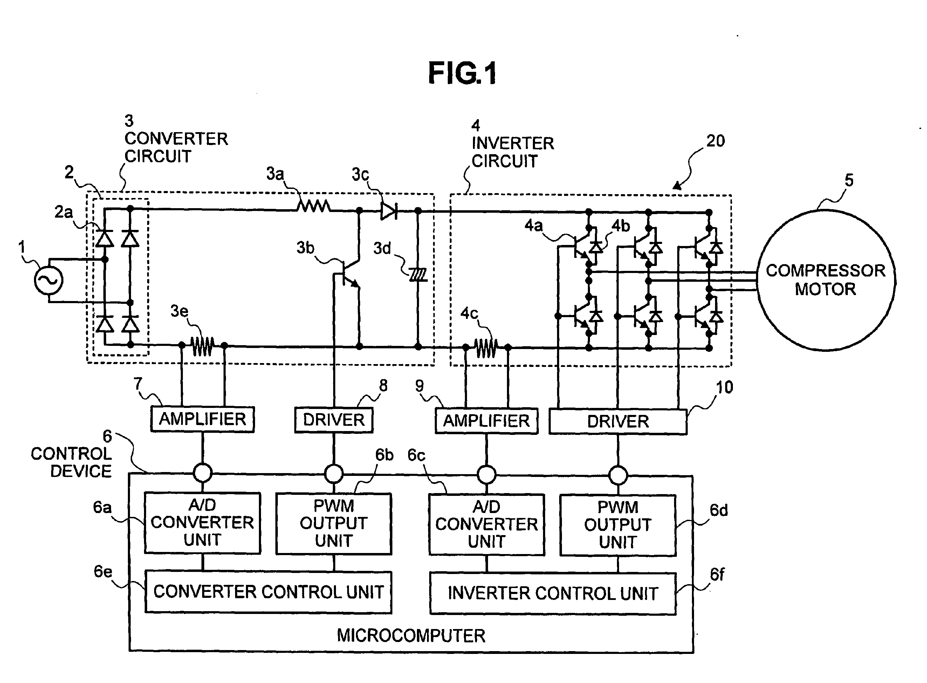

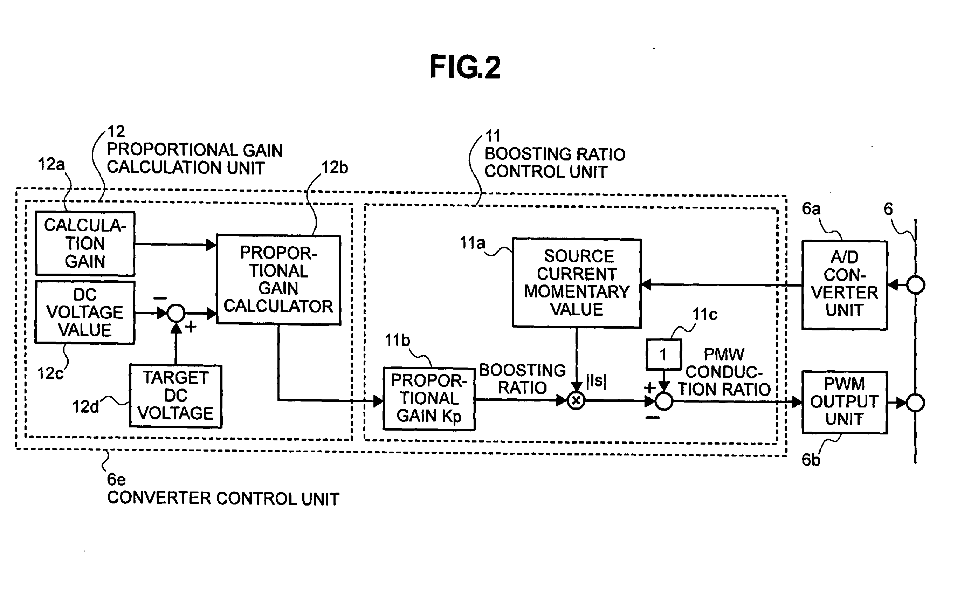

A motor driver according to a first embodiment will be described referring to Figs. 1 and 2.

A general structure of a motor driver 20 according to the first embodiment will be described referring to Fig. 1 as a view showing a whole structure of the motor driver according to the first embodiment.

The motor driver 20 is mainly formed of main components including a converter circuit 3 for rectifying, boosting and smoothing an AC source 1, an inverter circuit 4 for controlling a rotation speed of a permanent magnet synchronization motor 5 based on a DC voltage output from the converter circuit 3, and a control device 6 for controlling the converter circuit 3 and the inverter circuit 4.

The converter circuit 3 includes a rectifier circuit 2 for converting the AC voltage of the AC source 1 into the DC voltage, a reactor 3a and a booster chopper switching element 3b for boosting the source voltage, a diode 3c and a smoothing capacitor 3d for smoothing the output voltage from the booster chopper switching element 3b, and a shunt resistance 3e for momentarily detecting the short-circuit current upon short-circuit of the booster chopper switching element 3b.

The rectifier circuit 2 includes a diode bridge 2a, and is connected to an output side of the AC source 1. The rectifier circuit 2 rectifies the AC voltage of the AC source 1 into the DC voltage.

The reactor 3a is connected to an output side of the rectifier circuit 2, and the booster chopper switching element 3b is connected to an output side of the reactor 3a. The booster chopper switching element 3b short-circuits the AC source 1 via the rectifier circuit 2 and the reactor 3a. The source voltage rectified by the rectifier circuit 2 is boosted using the switching operation of the booster chopper switching element 3b, and the energy accumulation effect of the reactor 3a. The booster chopper switching element 3b and the reactor 3a form the booster circuit. The control device 6 adjusts the power distribution ratio of the booster chopper switching element 3b. The reactor 3a may be connected closer to the input side than the rectifier circuit 2.

The inverter circuit 4 includes an IGBT (Insulated Gate Bipolar Transistor) 4a and a diode 4b for controlling the rotation speed of the permanent magnet synchronization motor 5 as the load based on the DC voltage boosted and smoothed by the converter circuit 3, and a shunt resistance 4c for detecting the DC current applied upon power distribution to the IGBT 4a. The shunt resistance 4c is connected in series with the IGBT 4a. The control device 6 adjusts the power distribution ratio of the IGBT 4a.

The control device 6 is formed of a microcomputer, and includes an A/D converter unit 6a for controlling the power distribution ratio to the booster chopper switching element 3b, a PWM (Pulse Wide Modulation) output unit 6b, a converter control unit 6e, an A/D (Analog/Digital) converter unit 6c for controlling the power distribution ratio of the IGBT 4a, a PWM output unit 6d and an inverter control unit 6f, respectively.

Control of the converter circuit 3 performed by the A/D converter unit 6a, the PWM output unit 6b, and the converter control unit 6e will be described hereinafter.

A momentary value of the source current detected by the shunt resistance 3e of the converter circuit 3 is amplified by an amplifier 7. The momentary value of the source current amplified by the amplifier 7 is loaded into the converter control unit 6e via the A/D converter unit 6a. The converter control unit 6e calculates the conduction ratio of the booster chopper switching element 3b using a voltage value loaded into the converter control unit 6e and the proportional gain for controlling the input current waveform into the sinusoidal waveform in synchronization with the source voltage. The conduction ratio of the booster chopper switching element 3b calculated by the converter control unit 6e is established by adjusting the PWM ON time of the PWM output unit 6b. The PWM ON time output from the PWM output unit 6b is output to the booster chopper switching element 3b in the converter circuit 3 via a driver 8 so as to drive the booster chopper switching element 3b. This makes it possible to realize the converter control under which the input current waveform is formed into the sinusoidal waveform in synchronization with the source voltage.

Control of the inverter circuit 4 executed by the A/D converter unit 6c, the PWM output unit 6d, and the inverter control unit 6f will be described herinafter.

The motor control according to the embodiment is executed through the motor current sensorless/position sensorless vector control. The DC current applied to the shunt resistance 4c disposed at the DC side is only detected by the inverter circuit 4. More specifically, the DC current detected by the shunt resistance 4c is amplified by an amplifier 9 to be loaded into the inverter control unit 6f via the A/D converter unit 6c. The conduction ratio to the IGBT 4a of the inverter circuit 4 is established by adjusting the PWM ON time of the PWM output unit 6d. The PWM ON time output from the PWM output unit 6d is output to the IGBT 4a via a driver 10 so as to drive the IGBT 4a. This makes it possible to drive the permanent magnet synchronization motor 5 under the control of the rotation speed.

As the converter control unit 6e and the inverter control unit 6f are installed in the control device 6 as the control section, the respective control data may be exchanged with each other. The exchange of the control information allows calculation of the mean value of the source current values in the control device 6 or the target DC voltage in accordance with the motor rotation speed.

The converter control unit 6e will be explained referring to Fig. 2 which represents the control block diagram of the converter control unit 6e of the control device 6 as shown in Fig. 1.

The converter control unit 6e includes a boosting ratio control unit 11 and a proportional gain calculation unit 12.

The boosting ratio control unit 11 employs the basic control mode and the booster chopper constant ratio control mode. In the basic control mode, the input current waveform is controlled into the sinusoidal waveform in synchronization with the source voltage using the product of the input current momentary value |Is| (lla) as the absolute value and the proportional gain Kp (11b) without detecting a reference sinusoidal current command or the source phase. In the booster chopper constant ratio control mode, the switching operation is stopped around the peak of the input current in order to suppress the booster chopper switching loss.

The basic control mode will be descried hereinafter. When the conduction ratio (PWM ON time ratio) d of the booster chopper switching element 3b is set as shown in the following equation (1), the input current momentary value may be expressed by an equation (2).

**[Equation 1]**

$$d = 1 - Kp \cdot |is|$$

where 1 denotes the power distribution ratio of 100%, Kp denotes the current control gain, and is denotes the input current (momentary value).

**[Equation 2]**

$$is = \frac{\sqrt{2} \bullet Vs \bullet \sin \omega t}{Kp \bullet Ed}$$

where Vs denotes the effective value of the source voltage, Ed denotes the DC voltage, and $\omega$ denotes the electric angular frequency.

As the equation (2) shows, the input current momentary value "is" becomes sinusoidal in synchronization with the source voltage Vs without the reference waveform such as the source voltage waveform. This is the fundamental of the basic control mode.

The booster chopper constant ratio control mode will be described hereinafter. The equation (3) for calculating the momentary boosting ratio is established by modifying the equation (2).

**[Equation 3]**

$$Kp \bullet is = \frac{\sqrt{2} \bullet Vs \bullet \sin \omega t}{Ed}$$

Assuming that the booster chopper ratio a is set on the basis of the effective value, the following equation (4) is established. If the term Kp·Is in the equation is kept constant, the DC voltage Ed may be controlled to be higher than the source voltage Vs by a times.

**[Equation 4]**

$$Kp \bullet Is = \frac{1}{a}$$

where Is denotes the input current (effective value). The equation (5) is derived from providing the proportional gain Kp from the equation (4).

**[Equation 5]**

$$Kp = \frac{1}{a \bullet Is}$$

When substituting the equation (5) to the equation (1), the equation (6) for calculating the conduction ratio signal d is established.

**[Equation 6]**

$$d = 1 - \frac{|is|}{a \bullet Is}$$

As the equation (6) shows, when the input current |is| exceeds the a·Is, the conduction ratio signal d becomes 0% to stop the booster chopper switching operation. As a result, the input current is formed to have the waveform not to accept the booster chopper around the peak of the source voltage (region where the input current exceeds a· Is), thus suppressing the booster chopper switching loss. This is the fundamental of the booster chopper constant ratio control mode.

Under the aforementioned control, the input current waveform may be formed into the sinusoidal waveform in synchronization with the source voltage using only the input current momentary value and the proportional gain without detecting the reference sinusoidal current command waveform and the source phase, thus stopping the switching operation around the peak value of the input current.

The aforementioned control is executed in accordance with the block diagram shown in the boosting ratio control unit 11 of Fig. 2. Referring to the block diagram, as equations (1) and (5) for calculating the conduction ratio signal d show, the PWM ON time of the PWM output unit 6b is set by subtracting the product of the momentary value |Is| (11a) of the source current loaded into the control device 6 by the A/D converter unit installed therein and the proportional gain Kb (11b) from 1 (11c) as the maximum conduction ratio of 100%. The PWM ON time is output from the PWM output unit 6b as the power distribution ratio so as to drive the booster chopper switching element 3b in the converter circuit 3 via the driver 8.

The product of the input current momentary value |Is| (IIa) and the proportional gain Kb (11b) may be considered as the OFF time ratio of the PWM output unit to determine the PWM output function. In this case, the value does not have to be subtracted from 1 as the maximum conduction ratio of 100%, thus simplifying the calculation.

The proportional gain calculation unit 12 calculates a difference $\Delta Ed$ between the DC voltage value 12c smoothed by the smoothing capacitor 3d of the converter circuit 3 and a target DC voltage value 12d. The proportional gain calculator 12b calculates the proportional gain Kp based on a calculation gain 12a such that the difference $\Delta Ed$ becomes a predetermined value (for example, 0). When the AC source is lowered, the difference $\Delta Ed$ between the DC voltage value 12c smoothed by the smoothing capacitor 3d in the converter circuit 3 and the target DC voltage value 12d becomes large toward the negative direction, and the DC voltage value 12c becomes smaller than the target DC voltage value. The proportional gain calculator 12b calculates to decrease the proportional gain Kp using the calculation gain 12a such that the difference $\Delta Ed$ becomes 0. When the AC source becomes high, the difference $\Delta Ed$ between the DC voltage value 12c smoothed by the smoothing capacitor 3d in the converter circuit 3 and the target DC voltage value 12d becomes large toward the positive direction to make the DC voltage value 12c larger than the target DC voltage value. The proportional gain calculator 12b calculates to increase the proportional gain Kp using the calculation gain 12a such that the difference $\Delta Ed$ becomes 0. The calculation gain 12a used by the proportional gain calculator 12b denotes the calculation coefficient used for calculating the proportional gain Kp from the difference $\Delta Ed$. When the calculation gain 12a is increased, the proportional gain Kp to the difference $\Delta Ed$ becomes large to raise the boosting ratio. Conversely when the calculation gain 12a is reduced, the proportional gain Kp to the difference $\Delta Ed$ becomes small to lower the boosting ratio. As apparent from the equation (1), it is possible to adjust the conduction ratio d in accordance with the difference $\Delta Ed$ between the DC voltage value 12c and the target DC voltage value 12d. The control may be executed using the optimum conduction ratio d for suppressing the circuit loss while ensuring the low-cost structure and reliability of the booster chopper switching element.

The proportional gain calculator 12b may be structured to perform proportional, integral, or proportional integral operation.

**Second Embodiment**

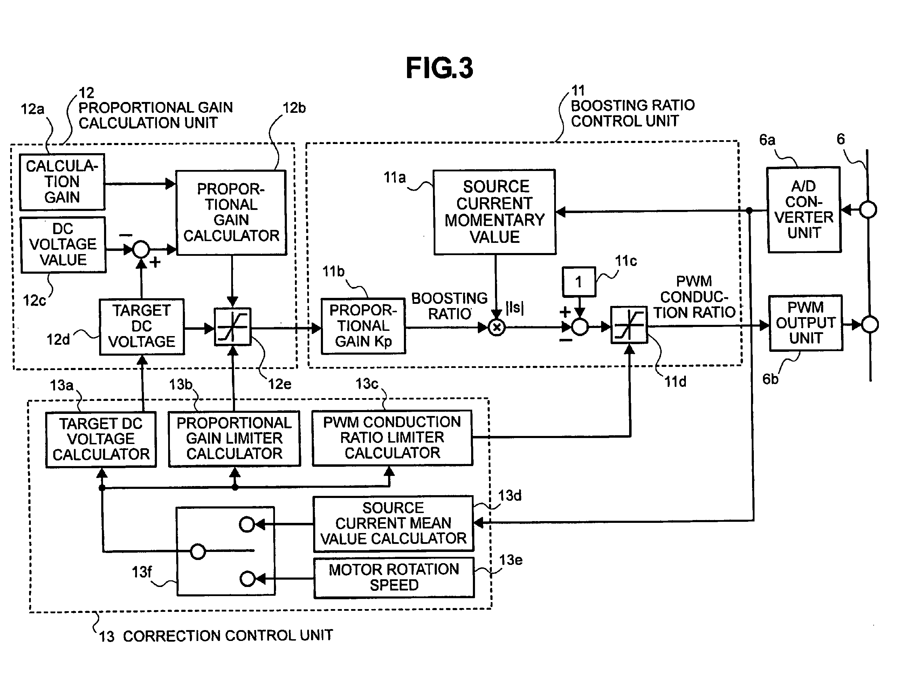

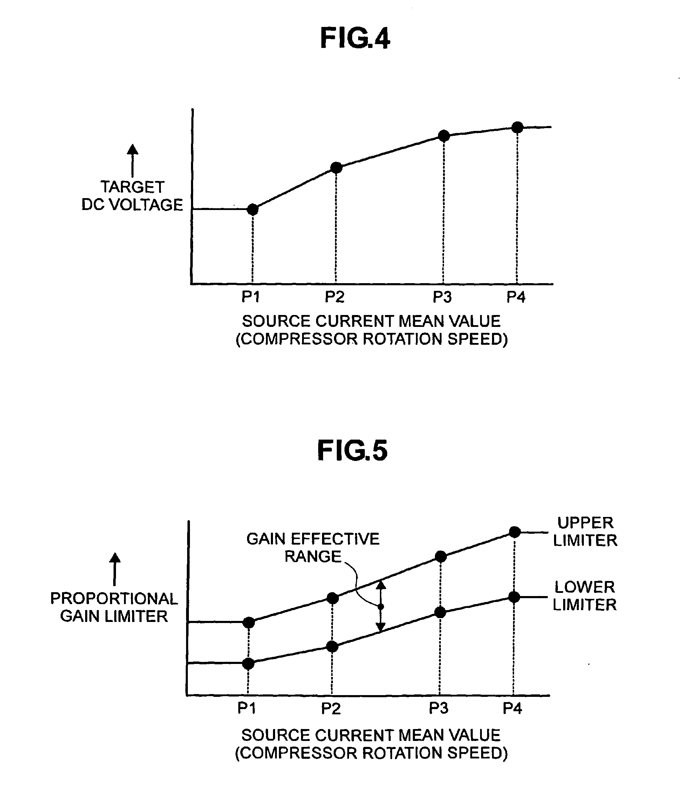

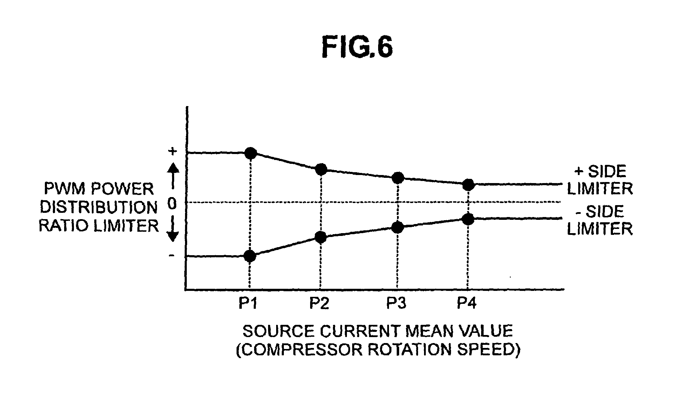

A motor driver according to a second embodiment of the present invention will be described referring to Figs. 3 to 6 hereinafter. Fig. 3 is a control block diagram of the converter control unit of the motor driver according to the second embodiment of the present invention. Fig. 4 is a view showing an exemplary state where the target DC voltage calculator is set by the converter control unit shown in Fig. 3. Fig. 5 is a view showing an exemplary state where the effective range of the proportional gain is set by the converter control unit shown in Fig. 3. Fig. 6 is a view showing an exemplary state where the PWM power distribution ratio limiter calculator is set by the converter control unit shown in Fig. 3. The second embodiment is basically the same as the first embodiment except the point to be described below. The explanation of the same features, thus, will be omitted.

A correction control unit 13 is newly added in the second embodiment, and vertical limiters 11d and 11e are provided for the boosting ratio control unit 11 and the proportional gain calculation unit 12, respectively.

The correction control unit 13 includes a target DC voltage calculator 13a which calculates the target DC voltage 12d in the proportional gain calculation unit 12 based on the source current mean value calculated by a source current mean value calculator 13d or a motor rotation speed 13e, a proportional gain limiter calculator 13b which calculates a correction effective range of the proportional gain Kp (11b) in the proportional gain calculation unit 12, and a PWM conduction ratio limiter calculator 13c which calculates the power distribution ratio correction range having the product of the input current momentary value |is| (11a) in the boosting ratio control unit 11 and the proportional gain Kb (11b) set as the PWM output OFF time.

The target DC voltage calculator 13a calculates the target DC voltage value 12d corresponding to the mean value of the source current calculated by the source current mean value calculator 13d or the motor rotation speed. That is, when the mean source current value calculated by the source current mean value calculator 13d or the motor rotation speed becomes large, the target DC voltage calculator 13a calculates to increase the target DC voltage value 12d based on the target DC voltage set as shown in Fig. 4. In consideration with the circuit efficiency of the converter circuit 2 and the efficiency of the permanent magnet synchronization motor 5 at plural points (P1, P2, P3 and P4), the target DC voltage value with the highest efficiency is selected from those set as shown in Fig. 4 through the experiment or analysis. Preferably, the linear interpolation is performed among the plural target DC voltage values 12d for the purpose of providing the smooth feature.

The proportional gain limiter calculator 13b calculates the gain effective ranges of the upper and the lower limiters as the effective range of the proportional gain Kp (11b) corresponding to the mean source current value calculated by the source current mean value calculator 13d or the motor rotation speed. That is, when the mean source current value calculated by the source current mean value calculator 13d or the motor rotation speed becomes large, the proportional gain limiter calculator 13b calculates to increase the upper and the lower limiters based on the gain effective range set as shown in Fig. 5, and further increase the gain effective range. In consideration with the circuit efficiency of the converter circuit 2 and the efficiency of the permanent magnet synchronization motor 5 at plural points (P1, P2, P3 and P4), the gain effective range with the highest efficiency is selected from those set as shown in Fig. 5 through the experiment or analysis. Preferably, the linear interpolation is performed among the plural gain effective ranges for the purpose of providing the smooth feature.

When the voltage of the AC source is lowered, the difference ΔEd between the DC voltage value 12c smoothed by the smoothing capacitor 3d in the converter circuit 3 and the target DC voltage value 12d becomes large, and accordingly, the proportional gain Kp calculated by the proportional gain calculator 12b is increased such that the difference ΔEd becomes 0. The proportional gain Kp (11b) is limited at the upper limit side in the gain effective range by the vertical limiter 12e. This makes it possible to suppress the temperature increase in the booster chopper switching element 3b in the converter circuit 3 or the excessive increase in the peak current of the source current. Conversely, when the AC source becomes high, the proportional gain Kp (11b) is limited at the lower limit side in the gain effective range by the vertical limiter 12e. As a result, the operation of the booster chopper switching element 3b in the converter circuit 3 may be kept in a stable state.

The PWM power distribution ratio limiter calculator 13c calculates the correction effective range of the power distribution ratio of the booster chopper switching element 3b in the boosting ratio control unit 11, and specifically, calculates the correction effective ranges of the upper and the lower limiters as the effective range of the PWM power distribution ratio corresponding to the mean source current value calculated by the source current mean value calculator 13d or the motor rotation speed as shown in Fig. 6. In other words, when the mean source current value calculated by the source current mean value calculator 13d or the motor rotation speed becomes large as shown in Fig. 6, the PWM power distribution ratio limiter calculator 13c calculates to reduce the correction effective range accordingly. In consideration with the circuit efficiency of the converter circuit 2 and the efficiency of the permanent magnet synchronization motor 5 at plural points (P1, P2, P3 and P4), the correction effective range with the highest efficiency is selected from those set as shown in Fig. 6 through the experiment or analysis. Preferably, the linear interpolation is performed among the plural correction effective ranges for the purpose of providing the smooth feature.

In the case where the power is distributed to the booster chopper switching element 3b based on the inappropriate information rather than the correct current information owing to the source current momentary value influenced by the external noise, the structure is capable of limiting the change ratio in the conduction ratio of the booster chopper switching element 3b, thus suppressing the influence of the external noise.

As the source current mean value 13d, or the constants arbitrarily set by a selector 13f for selecting the motor rotation speed 13e, the target DC voltage calculator 13a, the proportional gain limiter calculator 13b and the PWM power distribution ratio limiter calculator 13c in the correction control unit 13 shown in Fig. 3 are required to be adjusted in accordance with the performance of the permanent magnet synchronization motor, the capacitance of the smoothing capacitor, and the performance of the circuit component such as the booster chopper switching element. It is further preferable to provide the function for setting the constant using the external memory unit.

In the aforementioned embodiment, the highest efficiency DC voltage value may be obtained in consideration with the booster chopper circuit efficiency, the inverter circuit efficiency and the motor efficiency based on the mean value of the source current values or the motor rotation speed used for calculating the conduction ratio of the booster chopper switching element in the converter circuit.

In the case where the temperature of the booster chopper switching element or the peak value of the source current become high upon the increase in the conduction ratio of the booster chopper switching element with the low AC source, the difference between the present DC voltage value and the target DC voltage value is obtained, based on which the effective range of the boosting ratio upon calculation of the conduction ratio of the booster chopper switching element may be limited. This makes it possible to suppress the temperature increase in the booster chopper switching element as well as the peak value of the source current.

In the case where the conduction ratio of the booster chopper switching element is calculated by the converter control unit based on the inappropriate information owing to the influence of the external noise to the source current momentary value under the control where the input current waveform is formed into the sinusoidal waveform in synchronization with the source voltage using the source current momentary value and the proportional gain only without detecting the sinusoidal current command waveform or the source voltage phase in the basic converter control mode, the calculator for limiting the change ratio with respect to the conduction ratio of the booster chopper switching element allows the influence of the external noise to be suppressed.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1.    A motor driver provided with a converter circuit (3) and a control device (6) for controlling the converter circuit (3),

wherein the converter circuit (3) includes a rectifier circuit (2) for converting an AC current into a DC current, a booster circuit for boosting using a switching operation of a booster chopper switching element (3b) and an energy accumulation effect of a reactor (3a), and a smoothing capacitor (3d) for smoothing a boosted DC voltage;

the control device (6) includes a converter control unit (6e) for controlling the booster chopper switching element (3b) by calculating a power distribution ratio thereof; and

the converter control unit (6e) includes a boosting ratio control unit (11) for controlling an input current waveform into a sinusoidal waveform in synchronization with a source voltage based on a source current momentary value and a proportional gain without detecting a sinusoidal current command waveform and a source voltage phase as a reference, a proportional gain calculation unit (12) for calculating the proportional gain such that a difference between a DC voltage value smoothed by the smoothing capacitor (3d) of the converter circuit (3) and a target DC voltage becomes a predetermined value, and a correction control unit (13) for calculating the target DC voltage in accordance with the source current value or the motor rotation speed to be output to the proportional gain calculation unit (12).

2. The motor driver according to claim 1, further comprising an inverter circuit (4) for controlling a rotation speed of a permanent magnet synchronization motor (5) based on a DC voltage boosted and smoothed by the converter circuit (3).

3. The motor driver according to claim 2, wherein the correction control unit (13) calculates a conduction ratio of the booster chopper switching element (3b) from a difference between a present DC voltage value and the target DC voltage value so as to obtain the target DC voltage in accordance with one of the source current value and the motor rotation speed.

4. The motor driver according to claim 3, wherein the correction control unit (13) calculates a gain effective range with respect to the conduction ratio of the booster chopper switching element (3b) in accordance with one of the source current value and the motor rotation speed.

5. The motor driver according to claim 4, wherein the correction control unit (13) calculates an effective range of a change ratio with respect to the conduction ratio of the booster chopper switching element (3b) in accordance with one of the source current value and the motor rotation speed.

6. The motor driver according to any one of claims 2 to 5, wherein an external selection function and an external memory device are allowed to select one of the source current value and the motor rotation speed to obtain the target DC voltage.

7. The motor driver according to any one of claims 3 to 6, wherein an external selection function and an external memory device are allowed to select a set point of one of the target DC voltage, the conduction ratio of the booster chopper switching element (3b), the effective range with respect to the conduction ratio of the booster chopper witching element (3b), and an effective range of the change ratio with respect to the conduction ratio of the booster chopper switching element (3b).

**Patentansprüche**

1. Motorantrieb, der mit einer Umrichterschaltung (3) und einer Steuerungsvorrichtung (6) zum Steuern der Umrichterschaltung (3) versehen ist,

wobei die Umrichterschaltung (3) eine Gleichrichterschaltung (2) zum Umformen eines Wechselstroms in einen Gleichstrom, eine Boosterschaltung zum Erhöhen unter Anwendung eines Schaltvorgangs eines Booster-ChopperSchaltelements (3b) und einer Energieakkumulierungswirkung eines Reaktors (3a) sowie einen Glättungskondensator (3d) zum Glätten einer erhöhten Gleichspannung beinhaltet;

die Steuerungsvorrichtung (6) eine Umrichtersteuerungseinheit (6e) zum Steuern des Booster-Chopper-Schaltelements (3b) durch Berechnen seines Leistungsverteilungsverhältnisses beinhaltet; und

die Umrichtersteuerungseinheit (6e) eine Erhöhungsverhältnis-Steuerungselnheit (11) zum Steuern einer Eingabestromwellenform in eine Sinuswellenform synchron mit einer Quellspannung auf der Grundlage eines Quellstrom-Momentanwerts und einer proportionalen Verstärkung, ohne eine Sinusstrombefehlswellenform und eine Quellspannungsphase als Referenz zu erfassen, eine Proportionalverstärkungs-Berechnungseinheit (12) zum Berechnen der proportionalen Verstärkung so, dass eine Differenz zwischen einem Gleichspannungswert, der von dem Glättungskondensator (3d) der Umrichterschaltung (3) geglättet ist, und einer Sollgleichspannung einen vorgegebenen Wert annimmt, und eine Korrektursteuerungseinheit (13) zum Berechnen der Sollgleichspannung nach Maßgabe des Quellstromwerts oder der Motordrehzahl, die an die Proportionalverstärkungs-Berechnungseinheit (12) auszugeben ist, beinhaltet.

2. Motorantrieb nach Anspruch 1, weiterhin mit einer Wechselrichterschaltung (4) zum Steuern einer Drehzahl eines Dauermagnet-Synchronmotors (5) auf der Grundlage einer Gleichspannung, die von der Umrichterschaltung (3) erhöht und geglättet wird,

**3.** Motorantrieb nach Anspruch 2, wobei die Korrektursteuerungseinheit (13) ein Leitungsverhältnis des Booster-ChopperSchaltelements (3b) aus einer Differenz zwisehen einem aktuellen Gleichspannungswert und dem Soll-Gleichspannungswert berechnet, um die Soll-Gleichspannung nach Maßgabe von einem von dem Quellstromwert und der Motordrehzahl zu ermitteln.

**4.** Motorantrieb nach Anspruch 3, wobei die Korrektursteuerungseinheit (13) einen verstärkungswirksamen Bereich in Bezug auf das Leitungsverhältnis des Booster-Chopper-Schaltelements (3b) nach Maßgabe von einem von dem Quellstromwert und der Motordrehzahl berechnet.

**5.** Motorantrieb nach Anspruch 4, wobei die Korrektursteuerungseinheit (13) einen wirksamen Bereich eines Änderungsverhältnisses in Bezug auf das Leitungsverhältnis des Booster-Chopper-Schaltelements (3b) nach Maßgabe von einem von dem Quellstromwert und der Motordrehzahl berechnet.

**6.** Motorantrieb nach irgendeinem der Ansprüche 2 bis 5, wobei es einer externen Auswahlfunktion und einer externen Speichervorrichtung erlaubt ist, eines von dem Quellstromwert und der Motordrehzahl auszuwählen, um die Soll-Glelchspannung zu erhalten.

**7.** Motorantrieb nach irgendeinem der Ansprüche 3 bis 6, wobei es einer externen Auswahlfunktion und einer externen Spelchervorrlchtung erlaubt ist, einen Einstellpunkt von einem von der Soll-Gleichspannung, dem Leitungsverhältnis des Booster-Chopper-Schaltelements (3b), dem wirksamen Bereich in Bezug auf das Leitungsverhältnis des Booster-ChopperSchaltelements (3b) und einem wirksamen Bereich des Änderungsverhältnisses in Bezug auf das Leitungsverhältnis des Booster-Chopper-Schaltelements (3b) auszuwählen.

**Revendications**

**1.** Dispositif d'entraînement de moteur muni d'un circuit de conversion (3) et d'un dispositif de commande (6) pour commander le circuit de conversion (3), dans lequel le circuit de conversion (3) inclut un circuit redresseur (2) pour convertir un courant alternatif en un courant continu, un circuit survolteur pour effectuer un survoltage en utilisant une opération de commutation d'un élément de commutation de hacheur survolteur (3b) et un effet d'accumulation d'énergie d'un réacteur (3a), et un condensateur de lissage (3d) pour lisser une tension continue survoltée,

le dispositif de commande (6) inclut une unité de commande de convertisseur (6e) pour commander l'élément de commutation de hacheur survolteur (3b) en calculant un rapport de répartition de puissance de celui-ci, et

l'unité de commande de convertisseur (6e) inclut une unité de commande de rapport de survoltage (11) pour commander une forme d'onde de courant d'entrée dans une forme d'onde sinusoïdale en synchronisation avec une tension de source basée sur une valeur momentanée de courant de source et un gain proportionnel sans détecter de forme d'onde de commande de courant sinusoïdale et une phase de tension de source en tant que référence, une unité de calcul de gain proportionnel (12) pour calculer le gain proportionnel de sorte qu'une différence entre une valeur de tension continue lissée par le condensateur de lissage (3d) du circuit de conversion (3) et une tonsien continue cible devient une valeur prédéterminée, et une unité de commande de correction (13) pour calculer la tension continue cible selon la valeur de courant de source ou la vitesse de rotation du moteur à délivrer en sortie à l'unité de calcul de gain proportionnel (12).

**2.** Dispositif d'entraînement de moteur selon la revendication 1, comportant en outre un circuit inverseur (4) pour commander une vitesse de rotation d'un moteur de synchronisation à aimant permanent (5) sur la base d'une tension continue survoltée et lissée par le circuit de conversion (3).

**3.** Dispositif d'entraînement de moteur selon la revendication 2, dans lequel l'unité de commande de correction (13) calcul un rapport de conduction de l'élément de commutation de hacheur survolteur (3b) à partir d'une différence entre une valeur de tension continue actuelle et la valeur de tension continue cible de manière obtenir la tension continue cible conformément l'une de la valeur de courant de source et de la vitesse de rotation du moteur.

**4.** Dispositif d'entraînement de moteur selon la revendication 3, dans lequel l'unité de commande de correction (13) calcule une plage effective de gain en fonction du rapport de conduction de l'élément de commutation de hacheur survolteur (3b) conformément l'une de la valeur de courant de source et de la vitesse de rotation du moteur.

**5.** Dispositif d'entraînement de moteur selon la revendication 4, dans lequel l'unité de commande de correction (13) calcule une plage effective d'un rapport de changement en fonction du rapport de conduction de l'élément de commutation de hacheur survolteur (3b) conformément à l'une de la valeur de courant de source et de la vitesse de rotation du moteur.

6. Dispositif d'entraînement de moteur selon l'une quelconque des revendications 2 à 5, dans lequel une fonction de sélection externe et un dispositif de mémoire externe sont autorisés à sélectionner l'une de la valeur de courant de source et de la vitesse de rotation de moteur afin d'obtenir la tension continue cible.

7. Dispositif d'entraînement de moteur selon l'une quelconque des revendications 3 à 6, dans lequel une fonction de sélection externe et un dispositif de mémoire externe sont autorisée à sélectionner un point de consigne de l'un parmi la tension continue cible, le rapport de conduction de l'élément de commutation de hacheur survolteur (3b), la plage effective en fonction du rapport de conduction de l'élément de commutation de hacheur survolteur (3b), et une plage effective du rapport de changement en fonction du rapport de conduction de l'élément de commutation de hacheur survolteur (3b).

# FIG.1

EP 2 099 116 B1

# FIG.2

EP 2 099 116 B1

# FIG.3

12a
12 PROPORTIONAL GAIN
CALCULATION UNIT
12b

11
BOOSTING RATIO
CONTROL UNIT

6a    6

CALCULATION GAIN

PROPORTIONAL GAIN CALCULATOR

11a    SOURCE CURRENT MOMENTARY VALUE

A/D CONVERTER UNIT

DC VOLTAGE VALUE

12c

11b    PROPORTIONAL GAIN Kp    BOOSTING RATIO    |Is|    1    11c    PWM CONDUCTION RATIO

PWM OUTPUT UNIT

12d    TARGET DC VOLTAGE

12e

11d    6b

13a    13b    13c

TARGET DC VOLTAGE CALCULATOR

PROPORTIONAL GAIN LIMITER CALCULATOR

PWM CONDUCTION RATIO LIMITER CALCULATOR

13d    SOURCE CURRENT MEAN VALUE CALCULATOR

13f

13e    MOTOR ROTATION SPEED

13 CORRECTION CONTROL UNIT

13

# FIG.4

TARGET
DC VOLTAGE

P1    P2    P3    P4

SOURCE CURRENT MEAN VALUE
(COMPRESSOR ROTATION SPEED)

# FIG.5

PROPORTIONAL
GAIN LIMITER

GAIN EFFECTIVE
RANGE

UPPER
LIMITER

LOWER
LIMITER

P1    P2    P3    P4

SOURCE CURRENT MEAN VALUE
(COMPRESSOR ROTATION SPEED)

# FIG.6

PWM POWER
DISTRIBUTION
RATIO LIMITER

+ SIDE
LIMITER

- SIDE
LIMITER

P1  P2  P3  P4

SOURCE CURRENT MEAN VALUE
(COMPRESSOR ROTATION SPEED)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1114372 A
- JP 2796340 B
- JP 2809463 B

- WO 1114372 A
- WO 2796340 A
- WO 2809463 A

**Non-patent literature cited in the description**

- **JUNYANG LUO et al.** A new continuous conduction mode PFC IC with average current mode control. *POWER ELECTRONICS AND DRIVE SYSTEMS, 2003. PEDS 2003. THE FIFTH INTERN ATIONAL CONFERENCE ON SINGAPORE,* 17 November 2003, vol. 2, ISBN 978-0-7803-7885-8, 1110-1114